# EUROPÄISCHE PATENTSCHRIFT

(11) **EP 4 104 982 B1**
(45) Veröffentlichungstag und Bekanntmachung des Hinweises auf die Patenterteilung: **20.03.2024**
(21) Anmeldenummer: 22176111.7
(22) Anmeldetag: 30.05.2022
(51) Int. Cl.: B25J 17/02, B25J 9/10

(54) **ROBOTERARM MIT EINEM HANDGELENK UND EINEM BEFESTIGUNGSFLANSCH**
ROBOT ARM WITH A HAND JOINT AND A FLANGE
BRAS ROBOTIQUE DOTÉ D'UN POIGNET ET D'UNE BRIDE DE FIXATION

(30) Priorität: 14.06.2021 DE 102021115282
(43) Veröffentlichungstag der Anmeldung: 21.12.2022
(73) Patentinhaber: Dr. Johannes Heidenhain GmbH, 83301 Traunreut (DE); Technische Hochschule Rosenheim, 83024 Rosenheim (DE)
(72) Erfinder: Meierlohr, Christian, 83512 Wasserburg am Inn (DE); Landrichinger, Florian, 5165 Berndorf bei Salzburg (AT)

(56) Entgegenhaltungen:
- EP-A1- 0 172 603
- CN-A- 110 682 281
- JP-A- S6 044 288
- JP-A- S60 135 195
- JP-A- S62 100 809

## Beschreibung

Die Erfindung betrifft einen Roboterarm mit einem Handgelenk und einem Befestigungsflansch.

Roboterarme werden in der Fertigung von Produkten verwendet, um Fertigungsschritte automatisieren zu können. Die Roboterarme können dabei verschiedene Funktionen ausführen. Sie können Objekte, wie beispielsweise Glasscheiben oder Bleche halten und bezüglich der Dreh- und Winkellage entsprechend ausrichten, sodass eine Montage erfolgen kann. Roboterarme können auch mit zusätzlichen Funktionen ausgestattet sein, um beispielsweise Bleche schneiden zu können.

Ein solcher Roboterarm ist beispielsweise aus der EP 0 416 112 A1 bekannt. Der dort gezeigte Roboterarm erlaubt das Führen eines Laserstrahls. Der Laserstrahl wird in den Roboterarm eingespeist und innerhalb des Roboterarms gibt es entsprechende Umlenkspiegel, um den Laserstrahl umzulenken und zu fokussieren. Über entsprechende Motoren kann der Roboterarm bewegt werden, um verschiedene Schnitte in Materialien einbringen zu können.

Aus der JP S62 100809 A ist eine Robotersteuerung bekannt, welche mithilfe eines Winkeldetektors freie Winkel mehrerer Gelenke eines Roboterarms erfassen kann, um diese bei Bedarf rechnergestützt zu korrigieren. Hierzu werden zunächst auf Basis der ermittelten und abgespeicherten Daten Ziel-Winkel-Positionen berechnet, auf deren Grundlage dann die Steuerung von Servomotoren zur Korrektur der ermittelten Abweichungen erfolgt.

Aus der JP S60 44288 A ist ein Roboterarm für Industrieroboter mit drei Rotationsfreiheitsgraden bekannt. Der Roboterarm umfasst eine Gelenkbasis, ein Gelenkgehäuse und einen Übertragungsmechanismus. Der Übertragungsmechanismus umfasst mehrere Übertragungswellen, welche die Antriebskraft der Stellmotoren, welche sich im hinteren Teil des Roboterarms befinden, übertragen.

Aus der JP S60 135195 A ist ein Roboterarm mit einem speziellen Umlaufrädergetriebe bekannt, welches in der Lage ist, einen Konflikt zwischen einer Dreh-, Biege- und Schwenkachse zu beseitigen. Der Roboterarm umfasst mehrere Übertragungswellen, welche die Antriebskraft von einem distalen Ende des Roboterarm zum Gelenkmechanismus übertragen.

EP 0 172 603 A1 zeigt einen Industrieroboter mit drei unabhängig ansteuerbaren Primärmotoren und eine äußere Armbaugruppe mit drei zusätzlichen Motoren zur Bereitstellung dreier zusätzlicher Bewegungsachsen. Die Antriebseinheiten sind über koaxial montierte Wellen in der Lage, einen Werkstückgreifer des Industrieroboters zu verfahren.

Nachteilig am Stand der Technik ist, dass der Aufbau der Roboterarme für das industrielle Umfeld zu komplex ist, wenn diese sich um mehrere Achsen herum drehen sollen. Nicht nur die Größe ist hier häufig ein Problem, was auch zu höheren Kosten führt, sondern auch einen entsprechenden Platzbedarf erfordert. Für viele Anwendungen wäre allerdings ein kleinerer Roboterarm vorteilhaft, insbesondere dann, wenn nur leichte Bauteile aufzunehmen sind.

Es ist daher die Aufgabe der hier vorliegenden Erfindung, einen kompakten Roboterarm zu schaffen.

Die Aufgabe wird durch den erfindungsgemäßen Roboterarm gemäß dem unabhängigen Anspruch 1 gelöst. In den Unteransprüchen sind erfindungsgemäße Weiterbildungen des Roboterarms beschrieben.

Der erfindungsgemäße Roboterarm umfasst ein Handgelenk und einen Befestigungsflansch. An dem Befestigungsflansch können Effektoren, wie z.B. Haltemittel, angebracht werden. Der Wortlaut "Befestigungsflansch" soll ganz allgemein derart verstanden werden als etwas, um einen weiteren Gegenstand lagefixiert und verdrehsicher daran zu befestigen. Das Handgelenk umfasst eine erste Verstelleinrichtung, die zumindest ein Eingangszahnrad und ein Ausgangszahnrad umfasst. Der Roboterarm umfasst weiterhin eine erste Welle, wobei das Eingangszahnrad drehgekoppelt mit der ersten Welle verbunden ist. Die erste Welle erstreckt sich vom Handgelenk weg. Unter dem Wortlaut "drehgekoppelt" wird verstanden, dass eine Drehung der ersten Welle auch zu einer Drehung des Eingangszahnrads führt. Eine Zwischenschaltung von Getrieben ist möglich, erfolgt aber vorzugsweise nicht. Das Ausgangszahnrad ist dagegen mit dem Befestigungsflansch drehgekoppelt. Dies bedeutet, dass eine Drehung des Ausgangszahnrads wiederum zu einer Drehung des Befestigungsflansches führt. Weiterhin führt eine Drehung des Eingangszahnrads zu einer Drehung des Ausgangszahnrads und damit zu einer Drehung des Befestigungsflansches. Das Handgelenk umfasst weiterhin eine zweite Verstelleinrichtung, die dazu ausgebildet ist, das Ausgangszahnrad auf einem Kreisabschnitt um einen Mittelpunkt herum zu bewegen. Dadurch kann der Befestigungsflansch in einer Ebene bewegt werden. Unter einem "Kreisabschnitt" wird ein Teil einer Kreisbahn um den Mittelpunkt herum verstanden. Punkte auf dem Kreisabschnitt haben denselben Abstand zum Mittelpunkt.

Eine zweite Verstelleinrichtung ist ebenfalls im Handgelenk angeordnet , um das Ausgangszahnrad auf einem Kreisabschnitt zu bewegen, wobei sich der Mittelpunkt dieses Kreisabschnitts von der Drehachse des Ausgangszahnrads unterscheidet. Dadurch kann ein sehr kompakter Roboterarm geschaffen werden, bei dem der Befestigungsflansch nicht nur um seine Drehachse gedreht, sondern auch in einer Ebene bewegt werden kann.

Das Handgelenk umfasst eine dritte Verstelleinrichtung, welche einen Grundkörper umfasst. Eine Drehachse der dritten Verstelleinrichtung verläuft koaxial zu der Drehachse des Eingangszahnrads der ersten Verstelleinrichtung.

Die dritte Verstelleinrichtung ist dazu ausgebildet, die erste und die zweite Verstelleinrichtung durch eine dritte Motoranordnung derart zu verfahren, dass der Kreisabschnitt von einem Verlauf in einer ersten Ebene hin zu einem Verlauf in einer zweiten Ebene um den Mittelpunkt übergeht. Die erste Ebene und die zweite Ebene sind dabei in etwa senkrecht zueinander angeordnet. Der Wortlaut "in etwa" umfasst Abweichungen von vorzugsweise weniger als 5°. Mit anderen Worten könnte der Kreisabschnitt z.B. auf einer Azimutbahn liegen, die sich um den Mittelpunkt herum erstreckt, wobei die Azimutbahn in der ersten Ebene liegt. Durch Ansteuern der dritten Verstelleinrichtung könnte der Kreisabschnitt verstellt werden, sodass er dann z.B. auf einer Polarbahn liegt, die sich um den Mittelpunkt herum erstreckt, wobei die Polarbahn dann in der zweiten Ebene liegt. Dadurch ist es möglich, dass der Befestigungsflansch hinsichtlich drei rotatorischer und drei translatorischer Freiheitsgrade positioniert werden kann. Selbstverständlich sind auch Zwischenpositionen, also Zwischenebenen, zwischen der ersten Ebene und der zweiten Ebene denkbar.

Der Grundkörper der dritten Verstelleinrichtung ist mit einer Adapterplatte der dritten Motoranordnung verschraubt.

Bei der dritten Motoranordnung handelt es sich vorzugsweise um einen elektrischen Motor, der eine sehr genaue Positionierung (Einstellung der Winkellage) des Rotors zulässt. Beispielsweise können hier Schrittmotoren eingesetzt werden.

In einem weiteren Ausführungsbeispiel des Roboterarms umfasst die erste Verstelleinrichtung ein Zwischenzahnrad. Das Zwischenzahnrad ist zwischen dem Eingangszahnrad und dem Ausgangszahnrad angeordnet. Sowohl das Eingangszahnrad als auch das Ausgangszahnrad greifen dabei in die Zähne des Zwischenzahnrads ein. Vorzugsweise erfolgt dies spielfrei. Eine Drehbewegung des Eingangszahnrads (über die erste Welle) führt zu einer Drehbewegung des Zwischenzahnrads. Die Drehbewegung des Zwischenzahnrads führt dann zu einer Drehbewegung des Ausgangszahnrads. Ohne Einsatz der zweiten Verstelleinrichtung sind das Eingangszahnrad, das Zwischenzahnrad und das Ausgangszahnrad bezüglich ihrer Position im Raum relativ zueinander ortsfest aber drehbar angeordnet. Durch Einsatz der zweiten Verstelleinrichtung kann das Ausgangszahnrad auf dem Zwischenzahnrad abrollen und sich so entlang des Kreisabschnitts um den Mittelpunkt herum bewegen. Das Ausgangszahnrad steht während der Bewegung entlang dieses Kreisabschnitts in (ständigem) Eingriff mit dem Zwischenzahnrad.

Vorzugsweise haben das Eingangszahnrad, das Zwischenzahnrad und das Ausgangszahnrad einen runden Querschnitt. Weiter vorzugsweise haben zwei dieser Zahnräder oder alle dieser Zahnräder den gleichen runden Querschnitt. In diesem Fall wäre die Anzahl der Zähne jedes dieser Zahnräder gleichgroß. Die Zahnräder können auch eine unterschiedliche Anzahl von Zähnen aufweisen. Vorzugsweise hat das Eingangszahnrad, das Zwischenzahnrad und/oder das Ausgangszahnrad mehr als 15, 20, 25, 30, 35 oder mehr als 40 Zähne. Weiter vorzugsweise umfassen das Eingangszahnrad, das Zwischenzahnrad und/oder das Ausgangszahnrad Metall oder eine Metalllegierung bzw. bestehen aus einer solchen. Weiter vorzugsweise sind das Eingangszahnrad, dass Zwischenzahnrad und/oder das Ausgangszahnrad einteilig aufgebaut.

In einem weiteren Ausführungsbeispiel des Roboterarms verläuft eine Drehachse des Eingangszahnrads durch den Mittelpunkt. Eine Drehachse des Zwischenzahnrads verläuft ebenfalls durch den Mittelpunkt. Dabei stehen die Drehachse des Eingangszahnrads und die Drehachse des Zwischenzahnrads senkrecht zueinander.

In einem weiteren Ausführungsbeispiel des Roboterarms handelt es sich bei dem Eingangszahnrad und dem Ausgangszahnrad um Kegel(zahn)räder. Selbiges kann auch für das Zwischenzahnrad gelten. Die Kegelräder sind spiralverzahnt, sodass die Zähne des Ausgangszahnrads für den Fall, dass sich das Ausgangszahnrad am Anfang des Kreisabschnitts bzw. am Ende des Kreisabschnitts befindet, außer Eingriff zu den Zähnen des Eingangszahnrads stehen. Dies gilt auch dann, wenn sich das Eingangszahnrad und das Ausgangszahnrad in dieser Position leicht berühren sollten. Ergänzend oder alternativ wird eine Berührung des Eingangszahnrads und des Ausgangszahnrads vermieden. Dies gelingt dadurch, dass der Roboterarm noch eine Steuervorrichtung umfasst, wobei die Steuervorrichtung dazu ausgebildet ist, um sicherzustellen (zum Beispiel durch Ansteuern einer Motoreinrichtung), dass die zweite Verstelleinrichtung derart angesteuert wird, dass sich das Ausgangszahnrad durch Abrollen auf dem Zwischenzahnrad lediglich derart weit auf dem Kreisabschnitt bewegt, dass das Ausgangszahnrad sowohl am Anfang des Kreisabschnitts als auch am Ende des Kreisabschnitts (stets) berührungsfrei zu dem Eingangszahnrad positioniert ist.

Grundsätzlich erstreckt sich daher der Kreisabschnitt um weniger als 360° um den Mittelpunkt herum. Vorzugsweise erstreckt sich der Kreisabschnitt um mehr als 0°, 5°, 10°, 15°, 20°, 40°, 60°, 80°, 100°, 120°, 140°, 160°, 180°, 200°, 220°, 240°, 260°, 280°, 300°, 320° oder mehr als 340° und um den Mittelpunkt herum und vorzugsweise erstreckt sich der Kreisabschnitt um weniger als 350°, 330°, 310°, 290°, 270°, 250°, 230°, 210°, 190°, 170°, 150°, 130°, 110°, 90°, 70°, 50° oder um weniger als 30° um den Mittelpunkt herum.

In einem weiteren Ausführungsbeispiel des Roboterarms umfasst die zweite Verstelleinrichtung ein erstes Zahnrad und ein zweites Zahnrad. Der Roboterarm umfasst eine zweite Welle, wobei das erste Zahnrad drehgekoppelt mit der zweiten Welle verbunden ist. Dreht sich die zweite Welle, so dreht sich auch das erste Zahnrad. Eine Drehung des ersten Zahnrads bewirkt auch eine Drehung des zweiten Zahnrads. Die zweite Welle erstreckt sich ebenfalls vom Handgelenk weg. Die zweite Verstelleinrichtung umfasst einen Mitnehmerarm, wobei der Mitnehmerarm drehfest mit dem zweiten Zahnrad verbunden bzw. gekoppelt ist. Dies bedeutet, dass sich der Mitnehmerarm dann dreht, wenn sich auch das zweite Zahnrad dreht. Das Ausgangszahnrad ist an dem Mitnehmerarm gelagert, wobei eine Drehung des zweiten Zahnrads ein Bewegen des Mitnehmerarms um den Mittelpunkt herum und damit ein Bewegen des Ausgangszahnrads der ersten Verstelleinrichtung auf dem Kreisabschnitt um den Mittelpunkt herum bewirkt.

In einem weiteren Ausführungsbeispiel des Roboterarms verläuft die Drehachse des ersten Zahnrads der zweiten Verstelleinrichtung koaxial zur Drehachse des Eingangszahnrads der ersten Verstelleinrichtung. Dies gilt vorzugsweise auch für die erste Welle und die zweite Welle. Die erste Welle erstreckt sich dabei durch das erste Zahnrad der zweiten Verstelleinrichtung hindurch. Das Eingangszahnrad der ersten Verstelleinrichtung ist zwischen dem ersten Zahnrad der zweiten Verstelleinrichtung und dem Mittelpunkt angeordnet. Dadurch kann ein kompakter Aufbau realisiert werden.

In einem weiteren Ausführungsbeispiel des Roboterarms sind das erste Zahnrad und das zweite Zahnrad der zweiten Verstelleinrichtung jeweils drehbar aber in Bezug zueinander lageunveränderlich angeordnet, wenn lediglich (einzig) die erste und/oder zweite Verstelleinrichtung in Betrieb ist.

In einem weiteren Ausführungsbeispiel des Roboterarms verläuft eine Drehachse des ersten Zahnrads der zweiten Verstelleinrichtung durch den Mittelpunkt. Ergänzend oder alternativ verläuft auch eine Drehachse des zweiten Zahnrads der zweiten Verstelleinrichtung durch den Mittelpunkt. Vorzugsweise verlaufen die Drehachse des ersten Zahnrads und die Drehachse des zweiten Zahnrads senkrecht zueinander.

In einem weiteren Ausführungsbeispiel des Roboterarms umfasst das Ausgangszahnrad eine Ausgangswelle. Die Ausgangswelle ist mit dem Befestigungsflansch drehfest verbunden. Ein einteiliger Aufbau von Ausgangszahnrad, Ausgangswelle und Befestigungsflansch wäre möglich. Die Ausgangswelle könnte mit dem Ausgangszahnrad und/oder dem Befestigungsflansch auch verschraubt und/oder verlötet und/oder verschweißt und/oder verklemmt und/oder verklebt sein. Die Ausgangswelle ist dabei an dem Mitnehmerarm gelagert und vorzugsweise durch eine Öffnung in dem Mitnehmerarm hindurchgeführt. In diesem Fall ist die Ausgangswelle in Umfangsrichtung über eine bestimmte Länge vollständig von dem Mitnehmerarm umgeben. Es wäre auch denkbar, dass die Öffnung nach außen offen bzw. radial außen offen, also zugänglich ist, sodass die Ausgangswelle über diesen Zugang in den Mitnehmerarm eingelegt werden könnte.

In diesem Fall könnte die Ausgangswelle mit einem Bewegungsvektor in den Mitnehmerarm eingelegt werden, der sich senkrecht zur Längsachse der Öffnung erstreckt.

In einem weiteren Ausführungsbeispiel des Roboterarms umfasst der Roboterarm eine erste und eine zweite Motoranordnung. Bei der ersten und zweiten Motoranordnung handelt es sich vorzugsweise um einen elektrischen Motor, der eine sehr genaue Positionierung (Einstellung der Winkellage) des Rotors zulässt. Beispielsweise können hier Servo- oder Schrittmotoren eingesetzt werden. Die erste Motoranordnung ist dazu ausgebildet, um die erste Welle anzutreiben, also in Drehbewegung zu versetzen. Die zweite Motoranordnung ist dazu ausgebildet, um die zweite Welle anzutreiben, also in Drehbewegung zu versetzen. Die zweite Welle ist hohl, wobei die erste Welle durch die zweite Welle hindurch geführt ist. Wird die erste Motoranordnung in Drehbewegung versetzt, so dreht sich das Ausgangszahnrad um seine Drehachse und der Befestigungsflansch dreht sich ebenfalls um die Drehachse. Wird die zweite Motoranordnung in Drehbewegung versetzt, so dreht sich das zweite Zahnrad der zweiten Verstelleinrichtung um seine Drehachse und der Mitnehmerarm bewegt sich um den Mittelpunkt herum und bewegt dadurch auch das Ausgangszahnrad und damit den Befestigungsflansch um den Mittelpunkt herum.

In einem weiteren Ausführungsbeispiel des Roboterarms umfasst die dritte Verstelleinrichtung einen Grundkörper und einen ersten und zweiten Befestigungsabschnitt. Der erste und der zweite Befestigungsabschnitt stehen von dem Grundkörper (in dieselbe Richtung) ab, sind aber beabstandet voneinander angeordnet. Das Zwischenzahnrad der ersten Verstelleinrichtung ist drehbar an dem ersten Befestigungsabschnitt gelagert und optional auch gehalten. Das zweite Zahnrad der zweiten Verstelleinrichtung ist drehbar an dem zweiten Befestigungsabschnitt gelagert und optional auch gehalten. In einer ersten Position der dritten Verstelleinrichtung verläuft der Kreisabschnitt in der ersten Ebene und in einer zweiten Position der dritten Verstelleinrichtung verläuft der Kreisabschnitt in der zweiten Ebene. Die dritte Verstelleinrichtung ist dazu ausgebildet, um durch eine Drehung um ihre Drehachse (vorzugsweise um 90°) von der ersten Position in die zweite Position überzugehen, wodurch das Zwischenzahnrad der ersten Verstelleinrichtung an dem Eingangszahnrad der ersten Verstelleinrichtung abrollt und wodurch das zweite Zahnrad der zweiten Verstelleinrichtung an dem ersten Zahnrad der zweiten Verstelleinrichtung abrollt. Unter dem Wortlaut "abrollen" ist zu verstehen, dass sich die Lage der jeweils beiden Zahnräder im Raum zueinander verändert. Das Zwischenzahnrad dreht sich daher nicht nur um seine eigene Drehachse, sondern bewegt sich auch entlang des Umfangs des Eingangszahnrads. Selbiges gilt auch für das zweite Zahnrad. Das zweite Zahnrad dreht sich nicht nur um seine eigene Drehachse, sondern bewegt sich auch entlang des Umfangs des ersten Zahnrads.

Vorzugsweise sind die Drehachse des Zwischenzahnrads der ersten Verstelleinrichtung und die Drehachse des zweiten Zahnrads der zweiten Verstelleinrichtung koaxial zueinander ausgerichtet. Dies gilt dann für den gesamten Betrieb des Roboterarms, also für alle Betriebszustände. Dies gilt dann sowohl für den Fall, dass die erste Verstelleinrichtung angesteuert wird (das Eingangszahnrad dreht sich) als auch für den Fall, dass die zweite Verstelleinrichtung angesteuert wird (das erste Zahnrad dreht sich) als auch für den Fall, dass die dritte Verstelleinrichtung angesteuert wird (der Grundkörper dreht sich).

In einem weiteren Ausführungsbeispiel des Roboterarms umfasst dieser noch eine Steuervorrichtung. Die Steuervorrichtung ist dazu ausgebildet, um sicherzustellen, dass die erste und zweite Verstelleinrichtung derart angesteuert werden, dass die Position (Ort und Winkellage) des Befestigungsflansches im Raum in etwa ortsfest bleibt, während die dritte Verstelleinrichtung von der ersten Position in die zweite Position bzw. von der zweiten Position in die erste Position übergeht. Dies wird dadurch erreicht, dass gleichzeitig auch die erste Verstelleinrichtung und die zweite Verstelleinrichtung angesteuert werden. Für jede Position der dritten Verstelleinrichtung kann es Werte für die einzustellende Position der ersten und zweiten Verstelleinrichtung geben, die beispielsweise in einer Look-Up-Tabelle gespeichert sind bzw. über ein mathematisches Modell zum jeweiligen Zeitpunkt errechnet werden.

In einem weiteren Ausführungsbeispiel des Roboterarms ist die dritte Motoranordnung näher am Handgelenk angeordnet als die zweite Motoranordnung, wobei die zweite Motoranordnung wiederum näher am Handgelenk angeordnet ist als die erste Motoranordnung. Die zweite Welle verläuft durch die dritte Motoranordnung hindurch.

In einem weiteren Ausführungsbeispiel des Roboterarms sind die erste, zweite und dritte Motoranordnung unabhängig voneinander ansteuerbar.

Verschiedene Ausführungsbeispiele von Roboterarmen werden nachfolgend unter Bezugnahme auf die Zeichnungen beispielhaft beschrieben. Gleiche Gegenstände weisen dieselben Bezugszeichen auf. Die entsprechenden Figuren der Zeichnung zeigen im Einzelnen:
- Figur 1A:: zeigt ein erstes Beispiel eines Roboterarms;
- Figur 1B:: zeigt das erste Beispiel eines Roboterarms, wobei ein Ausgangszahnrad auf einem Kreisabschnitt um einen Mittelpunkt herum bewegt wurde, indem eine zweite Verstelleinrichtung angesteuert wurde;
- Figur 1C:: zeigt das erste Beispiel eines Roboterarms, wobei das Ausgangszahnrad auf dem Kreisabschnitt um einen Mittelpunkt herum bewegt wurde, indem eine dritte Verstelleinrichtung angesteuert wurde;
- Figur 2:: zeigt eine seitliche Ansicht des ersten Beispiels eines Roboterarms;
- Figur 3:: zeigt ein zweites Beispiel eines Roboterarms mit einer ersten, zweiten und dritten Motoranordnung;
- Figur 4:: zeigt einen Schnitt durch ein Ausführungsbeispiel eines erfindungsgemäßen Roboterarms; und
- Figur 5:: zeigt einen Schnitt durch ein Ausführungsbeispiel eines Handgelenks des erfindungsgemäßen Roboterarms.

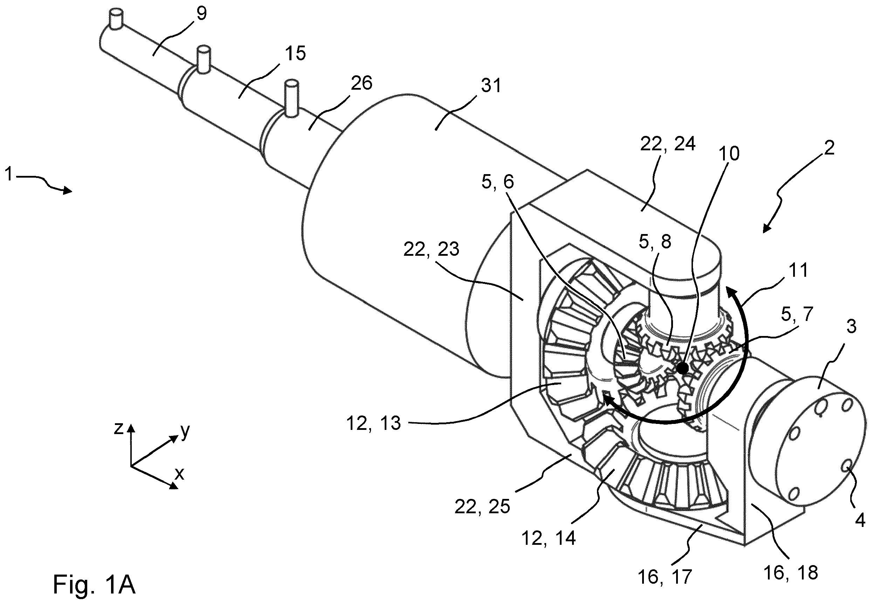

Figur 1A zeigt ein erstes Beispiel eines Roboterarms 1. Dieser Roboterarm 1 umfasst ein Handgelenk 2 und einen Befestigungsflansch 3. An den Befestigungsflansch 3 können verschiedene Effektoren angebracht werden. Hierzu stehen beispielsweise Gewindebohrungen 4 zur Verfügung. Der Befestigungsflansch 3 ist um eine Drehachse drehbar.

Das Handgelenk 2 umfasst eine erste Verstelleinrichtung 5, die in diesem Fall ein Eingangszahnrad 6, ein Ausgangszahnrad 7 und ein Zwischenzahnrad 8 umfasst. Das Zwischenzahnrad 8 greift in die Zähne des Eingangszahnrads 6 ein. Das Ausgangszahnrad 7 greift in die Zähne des Zwischenzahnrads 8 an.

Der Roboterarm 1 umfasst außerdem eine erste Welle 9. Die erste Welle 9 ist mit dem Eingangszahnrad 6 drehgekoppelt. Die erste Welle 9 erstreckt sich vom Handgelenk 2 weg.

Das Ausgangszahnrad 7 ist mit dem Befestigungsflansch 3 drehgekoppelt, wobei es bei einer Drehung des Eingangszahnrads 6 zu einer Drehung des Zwischenzahnrads 8 und damit zu einer Drehung des Ausgangszahnrads 7 kommt, wodurch es auch zu einer Drehung des Befestigungsflansches 3 kommt.

In dem dargestellten Beispiel sind das Eingangszahnrad 6, das Zwischenzahnrad 8 und das Ausgangszahnrad 7 gleich groß. Die Zahnräder 6, 7, 8 haben vorzugsweise auch die gleiche Anzahl an Zähnen. Die Zähne greifen dabei spielfrei ineinander ein. Grundsätzlich könnte die Größe (Durchmesser) eines Zahnrads 6, 7, 8 (zum Beispiel Eingangszahnrad 6 oder Ausgangszahnrad 7 oder Zwischenzahnrad 8) auch von der Größe des oder der anderen Zahnräder 6, 7, 8 abweichen, wodurch sich ein Getriebeeffekt einstellt.

Die Drehachsen des Eingangszahnrads 6, des Zwischenzahnrads 8 und des Ausgangszahnrads 7 schneiden sich in einem Mittelpunkt 10. Dies gilt auch dann, wenn das Ausgangszahnrad 7 auf einem Kreisabschnitt 11 um den Mittelpunkt 10 herum bewegt wird. Der Kreisabschnitt 11 liegt gemäß den Koordinatenangaben in Figur 1A in der XY-Ebene.

Um das Ausgangszahnrad 7 auf dem Kreisabschnitt 11 um den Mittelpunkt 10 herum zu bewegen, ist eine zweite Verstelleinrichtung 12 vorgesehen. Die zweite Verstelleinrichtung 12 umfasst ein erstes Zahnrad 13 und ein zweites Zahnrad 14. Die Drehachse des ersten Zahnrads 13 verläuft koaxial zur Drehachse des Eingangszahnrads 6. Die Drehachse des zweiten Zahnrads 14 verläuft koaxial zur Drehachse des Zwischenzahnrads 8.

In dem dargestellten Beispiel sind das erste Zahnrad 13 und das zweite Zahnrad 14 gleich groß. Die Zahnräder 13, 14 haben vorzugsweise auch die gleiche Anzahl an Zähnen. Die Zähne greifen dabei spielfrei ineinander ein. Grundsätzlich könnte das erste Zahnrad 13 auch größer oder kleiner (Durchmesser) sein als das zweite Zahnrad 14, wodurch sich ein Getriebeeffekt zwischen beiden Zahnrädern 13, 14 einstellt.

Der Roboterarm 1 umfasst eine zweite Welle 15, die mit dem ersten Zahnrad 13 drehgekoppelt ist. Die zweite Welle 15 erstreckt sich ebenfalls von dem Handgelenk 2 weg. Eine Drehung der zweiten Welle 15 bewirkt eine Drehung des ersten Zahnrads 13, was wiederum eine Drehung des zweiten Zahnrads 14 bewirkt.

Die erste Welle 9 erstreckt sich durch die zweite Welle 15 hindurch. Die erste Welle 9 ist länger als die zweite Welle 15.

Die erste Welle 9 erstreckt sich auch durch das erste Zahnrad 13 hindurch. Das Eingangszahnrad 6 der ersten Verstelleinrichtung 5 ist zwischen dem ersten Zahnrad 13 der zweiten Verstelleinrichtung 12 und dem Mittelpunkt 10 angeordnet. Die erste Welle 9 und die zweite Welle 15 können unabhängig voneinander gedreht werden. Dies bedeutet, dass das Eingangszahnrad 6 der ersten Verstelleinrichtung 5 und das erste Zahnrad 13 der zweiten Verstelleinrichtung 12 unabhängig voneinander gedreht werden können. Im Betrieb des Roboterarms 1 sind das Eingangszahnrad 6 der ersten Verstelleinrichtung 5 und das erste Zahnrad 13 der zweiten Verstelleinrichtung 12 zwar drehbar zueinander angeordnet, aber bezüglich ihrer Drehachsen stets koaxial zueinander ausgerichtet.

Eine Drehachse des ersten Zahnrads 13 der zweiten Verstelleinrichtung 12 verläuft durch den Mittelpunkt 10. Dies gilt auch für eine Drehachse des zweiten Zahnrads 14 der zweiten Verstelleinrichtung 12. Eine Drehachse des ersten Zahnrads 13 verläuft senkrecht zu einer Drehachse des zweiten Zahnrads 14.

In Figur 1A ist außerdem ein Koordinatensystem dargestellt. Dieses umfasst eine X-Achse, eine Y-Achse und eine Z-Achse. Dieses Koordinatensystem ist auch in den weiteren Figuren vorhanden. Die erste und zweite Welle 9, 15 erstrecken sich entlang der X-Achse. Selbiges gilt auch für die Drehachsen des ersten Zahnrads 13 und des Eingangszahnrads 6.

Damit das Ausgangszahnrad 7 auf dem Kreisabschnitt 11 um den Mittelpunkt 10 herum bewegt werden kann, umfasst die zweite Verstelleinrichtung 12 noch einen Mitnehmerarm 16. Der Mitnehmerarm 16 ist drehfest mit dem zweiten Zahnrad 14 verbunden bzw. gekoppelt. Dreht sich das zweite Zahnrad 16 um seine Drehachse, so wird der Mitnehmerarm 16 ebenfalls um diese Drehachse verschwenkt bzw. gedreht. Der Mitnehmerarm 16 umfasst vorzugsweise ein erstes Segment 17, welches nach radial außen von dem zweiten Zahnrad 14 absteht. Ein zweites Segment 18 ist vorzugsweise senkrecht zum ersten Segment 17 ausgerichtet und erstreckt sich vorzugsweise parallel zur Drehachse des zweiten Zahnrads 14. Das Ausgangszahnrad 7 ist an dem Mitnehmerarm 16 und insbesondere an dessen zweitem Segment 18 gelagert. Weiterhin ist ein Robotergehäuse 31 dargestellt.

Dreht sich das zweite Zahnrad 14, so wird das Ausgangszahnrad 7 in dem Beispiel aus Figur 1A in einer ersten Ebene verschwenkt. Bei dieser ersten Ebene handelt es sich in diesem Fall um die XY-Ebene.

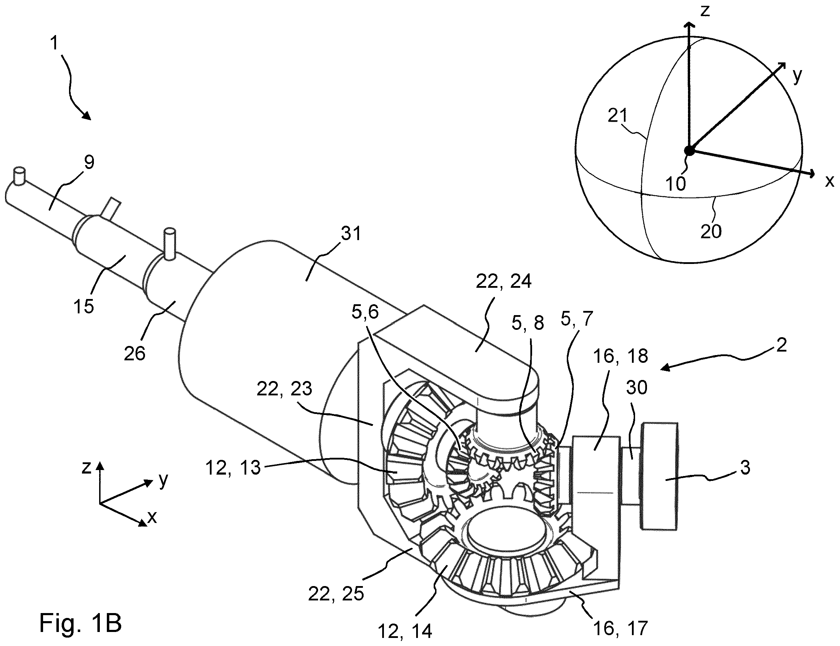

In Figur 1B ist dargestellt, dass sich die zweite Welle 15 gegenüber der Stellung in Figur 1A gedreht hat. Dadurch haben sich auch das erste und das zweite Zahnrad 13, 14 gedreht. Der Mitnehmerarm 16 wurde ebenfalls verschwenkt, was zu einer Bewegung des Ausgangszahnrads 7 in der ersten Ebene (XY-Ebene) geführt hat.

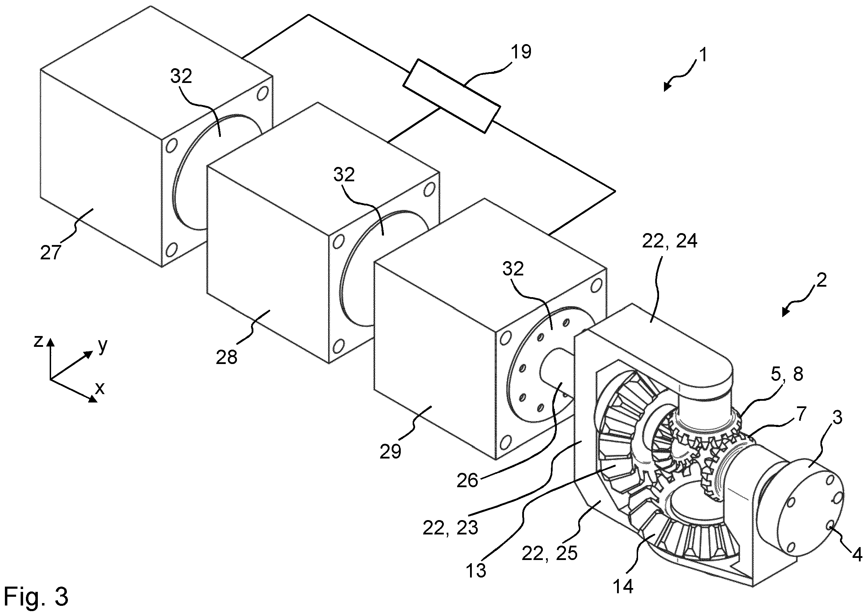

Würde die zweite Welle 15 nun weiter gedreht werden, so könnte dies dazu führen, dass das Ausgangszahnrad 7 mit dem Eingangszahnrad 6 in Kontakt gelangt. Vorzugsweise handelt es sich daher bei dem Eingangszahnrad 6 und bei dem Ausgangszahnrad 7 um Kegelräder, wobei die Kegelräder spiralverzahnt sind, sodass die Zähne des Ausgangszahnrads 7 nicht in Eingriff zu den Zähnen des Eingangszahnrads 6 gelangen, wenn das Ausgangszahnrad 7 am Anfang des Kreisabschnitts 11 bzw. am Ende des Kreisabschnitts 11 positioniert ist. Grundsätzlich wäre es auch denkbar, dass der Roboterarm 1 eine Steuervorrichtung 19 (Figur 3) umfasst, die sicherstellt, dass die zweite Verstelleinrichtung 12 lediglich derart angesteuert wird, dass das Ausgangszahnrad 7 beim Abrollen auf dem Zwischenzahnrad 8 nicht in Kontakt zu dem Eingangszahnrad 6 gelangt, also stets kontaktfrei zu dem Eingangszahnrad 6 angeordnet ist.

Bei den Zwischenzahnrad 8 und dem ersten und zweiten Zahnrad 13, 14 kann es sich ebenfalls um Kegelräder handeln, die weiter vorzugsweise ebenfalls spiralverzahnt sind.

In Figur 1B ist außerdem eine Kugel dargestellt mit dem Mittelpunkt 10 in der Mitte. Der Kreisabschnitt 11 liegt in Figur 1B in der ersten Ebene (XY-Ebene). Man kann daher auch sagen, dass er in der Azimutebene 20 liegt und das Ausgangszahnrad 7 eine Azimutbahn um den Mittelpunkt 10 beschreibt.

Der erste Kreisabschnitt 11 kann auch in eine zweite Ebene gelegt, also transformiert werden, die senkrecht zur ersten Ebene liegt. Bei der zweiten Ebene kann es sich um eine Polarebene 21 handeln, sodass das Ausgangszahnrad 7 eine Polarbahn um den Mittelpunkt 10 beschreibt.

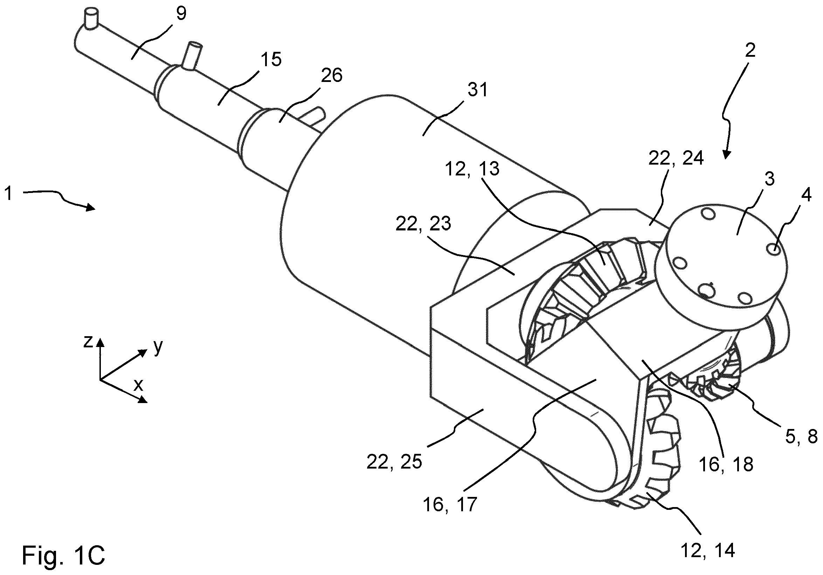

Dieser Sachverhalt ist in Figur 1C dargestellt. Das Handgelenk 2 umfasst hierzu eine dritte Verstelleinrichtung 22. Eine Drehachse der dritten Verstelleinrichtung 22 verläuft koaxial zu der Drehachse des Eingangszahnrads 6 bzw. des ersten Zahnrads 13. Die dritte Verstelleinrichtung 22 ist dazu ausgebildet, um die erste und die zweite Verstelleinrichtung 5, 12 derart zu verfahren, dass der Kreisabschnitt 11 von einem Verlauf in der ersten Ebene hin zu einem Verlauf in der zweiten Ebene um den Mittelpunkt 10 übergeht. Die erste Ebene und die zweite Ebene sind dabei senkrecht zueinander angeordnet.

Die dritte Verstelleinrichtung 22 umfasst einen Grundkörper 23 und einen ersten und zweiten Befestigungsabschnitt 24, 25. Der erste und der zweite Befestigungsabschnitt 24, 25 stehen (vorzugsweise in dieselbe Richtung) von dem Grundkörper 23 ab, sind aber beabstandet zueinander angeordnet. Das Zwischenzahnrad 8 der ersten Verstelleinrichtung 5 ist drehbar an dem ersten Befestigungsabschnitt 24 gelagert und vorzugsweise auch durch diesen gehalten. Das zweite Zahnrad 14 der zweiten Verstelleinrichtung 12 ist drehbar an dem zweiten Befestigungsabschnitt 25 gelagert und vorzugsweise durch diesen gehalten.

In einer ersten Position der dritten Verstelleinrichtung 22 (siehe Figuren 1A, 1B) verläuft der Kreisabschnitt 11 in der ersten Ebene und in einer zweiten Position der dritten Verstelleinrichtung 22 (siehe Figur 1C) verläuft der Kreisabschnitt 11 in der zweiten Ebene. Die dritte Verstelleinrichtung 22 ist dazu ausgebildet, um durch eine Drehung um die Drehachse von der ersten Position in die zweite Position überzugehen. Zwischen den Figuren 1A, 1B und der Figur 1C erfolgt eine Drehung um 90°. Dies schließt auch Zwischenpositionen mit ein. So wäre eine Drehung um 45° ebenfalls denkbar. Dadurch rollt das Zwischenzahnrad 8 der ersten Verstelleinrichtung 5 an dem Eingangszahnrad 6 ab. Ebenfalls rollt das zweite Zahnrad 14 der zweiten Verstelleinrichtung 12 an dem ersten Zahnrad 13 ab. Wird nun die zweite Verstelleinrichtung 12 betätigt, so erfolgt ein Verschwenken des Ausgangszahnrads 7 entlang der zweiten Ebene (XZ-Ebene). Für die Betätigung kann eine dritte Welle 26 vorgesehen sein, die drehfest mit dem Grundkörper 23 verbunden ist. Ein einteiliger Aufbau ist ebenfalls denkbar.

Das erste Segment 17 des Mitnehmerarms 16 ist vorzugsweise zwischen dem zweiten Zahnrad 14 und dem zweite Befestigungsabschnitt 25 angeordnet. Das erste Segment 17 ist gegenüber dem zweiten Befestigungsabschnitt 25 drehbar angeordnet.

Die dritte Verstelleinrichtung 22 sieht vorzugsweise U-förmig aus.

Vorzugsweise sind das Eingangszahnrad 6, das Zwischenzahnrad 8, das Ausgangszahnrad 7, das erste Zahnrad 13 und das zweite Zahnrad 14 zwischen dem ersten Befestigungsabschnitt 24 und dem zweiten Befestigungsabschnitt 25 angeordnet.

Der Grundkörper 23 der dritten Verstelleinrichtung 22 ist vorzugsweise weiter von dem Mittelpunkt 10 beabstandet als das erste Zahnrad 13 und das Eingangszahnrad 6.

Bei einer Betätigung der dritten Verstelleinrichtung 22 (siehe Figur 1C) ist es ebenfalls denkbar, dass die Steuervorrichtung 19 dazu ausgebildet ist, um sicherzustellen, dass die erste und zweite Verstelleinrichtung 5, 12 derart angesteuert werden, dass die Position des Befestigungsflansches 3 im Raum in etwa ortsfest bleibt, wenn die dritte Verstelleinrichtung 22 von der ersten Position in die zweite Position bzw. von der zweiten Position in die erste Position übergeht.

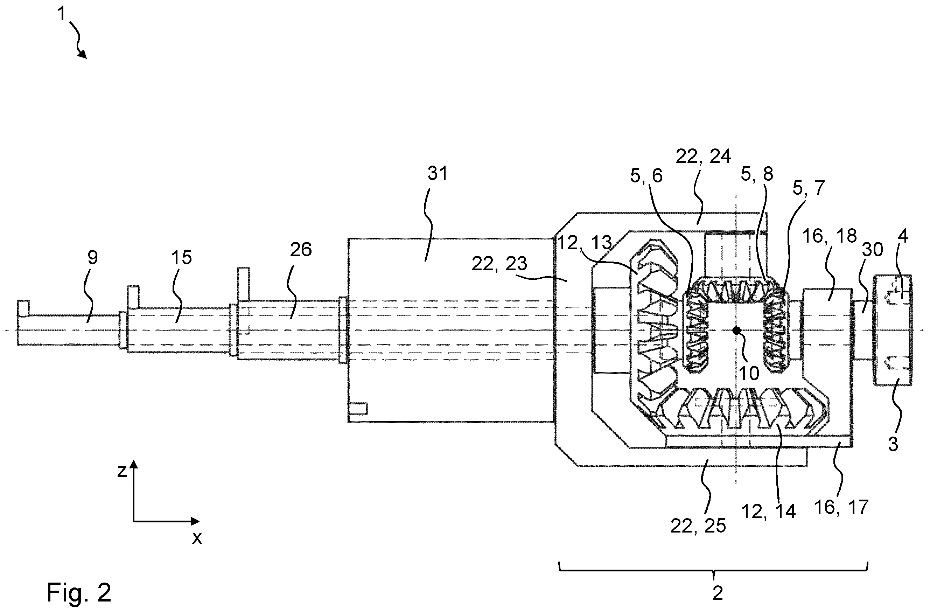

Figur 2 zeigt eine seitliche Ansicht des Roboterarms 1 aus Figur 1A. Der zweite Befestigungsabschnitt 25 der dritten Verstelleinrichtung 22 erstreckt sich weiter vom Grundkörper 23 weg als der erste Befestigungsabschnitt 24.

Figur 3 zeigt ein weiteres Beispiel eines Roboterarms 1. Die erste, zweite und dritte Welle 9, 15 und 26 werden von einer ersten, zweiten und dritten Motoranordnung 27, 28 und 29 angesteuert. Ebenfalls ist die Steuervorrichtung 19 dargestellt. Die Steuervorrichtung 19 kann beispielsweise die erste und die zweite Motoranordnung 27, 28 derart ansteuern, dass auch bei einer Ansteuerung der dritten Motoranordnung 29 die Position des Befestigungsflansches 3 im Raum in etwa ortsfest bleibt, während die dritte Verstelleinrichtung 22 (durch Betätigung der dritten Motoranordnung 29) von der ersten in die zweite bzw. von der zweiten in die erste Position übergeht.

Die jeweiligen Wellen 9, 15, 26 können mit dem entsprechenden Rotor 33 der jeweiligen Motoranordnung 27, 28, 29 verschraubt und/oder verklemmt sein. Die erste, zweite und dritte Motoranordnung 27, 28, 29 sind entlang der X-Achse, also entlang der Drehachse des Eingangszahnrads 6, des ersten Zahnrads 13 bzw. der dritten Verstelleinrichtung 22 angeordnet. Die jeweiligen Motoranordnungen 27, 28, 29 können in separaten Gehäusen untergebracht sein.

Sind lediglich die erste und die zweite Motoranordnung 27, 28, nicht jedoch die dritte Motoranordnung 29 in Betrieb, so sind das Eingangszahnrad 6 und das Zwischenzahnrad 8 jeweils drehbar aber in Bezug zueinander lageunveränderlich angeordnet. Selbiges gilt auch für das erste Zahnrad 13 und das zweite Zahnrad 14.

Die dritte Welle 26 ist vorzugsweise hohl. Durch die dritte Welle 26 verläuft die zweite Welle 15. Die zweite Welle 15 ist vorzugsweise hohl und durch die zweite Welle 15 verläuft die erste Welle 9. Zwischen den einzelnen Wellen 9, 15 und 26 können Gleitelemente angeordnet sein, die vorzugsweise aus Kunststoff, insbesondere Polytetrafluorethylen bestehen oder solches umfassen.

Die jeweiligen ersten, zweiten und/oder dritten Wellen 9, 15, 26 sind jeweils über eine Adapterplatte 32 mit dem jeweiligen Rotor 33 der jeweiligen ersten, zweiten und/oder dritten Motoranordnung 27, 28, 29 verbunden.

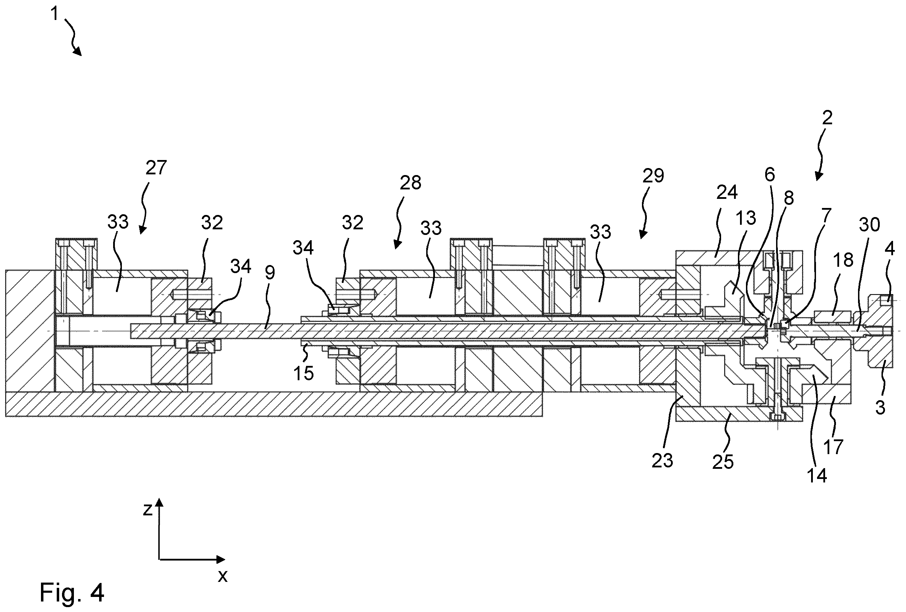

Figur 4 zeigt ein erfindungsgemäßes Ausführungsbeispiel in Form eines Schnitts durch einen Roboterarm 1. In diesem Fall gibt es keine dritte Welle 26, sondern der Grundkörper 23 der dritten Verstelleinrichtung 22 ist unmittelbar mit einer Adapterplatte 32 an den Rotor 33 der dritten Motoranordnung 29 gekoppelt. Über form- oder kraftschlüssige Verbindungen ist die zweite Welle 15 mit dem Rotor 33 der zweiten Motoranordnung 28 drehgekoppelt und über form- oder kraftschlüssige Verbindungen ist auch die erste Welle 9 mit dem Rotor 33 der ersten Motoranordnung 27 drehgekoppelt. Insbesondere ist die zweite Welle 15 über ein Klemmelement 34 mit der Adapterplatte 32 verklemmt, die wiederum mit dem Rotor 33 verklemmt, verklebt, verlötet und/oder verschraubt ist. Bevorzugt ist auch die erste Welle 9 über ein Klemmelement 34 mit der Adapterplatte 32 verklemmt, die wiederum mit dem Rotor 33 verklemmt, verklebt, verlötet und/oder verschraubt ist. Der Grundkörper 23 der dritten Verstelleinrichtung 22 ist mit der Adapterplatte 32 der dritten Motoranordnung 29 verschraubt.

Die einzelnen Zahnräder wurden hier stark vereinfacht dargestellt.

Zu erkennen ist allerdings, dass das Ausgangszahnrad 7 eine Ausgangswelle 30 umfasst. Die Ausgangswelle 30 ist mit dem Ausgangszahnrad 7 und dem Befestigungsflansch 3 drehfest verbunden. Die Ausgangswelle 30 ist an dem Mitnehmerarm 16 gelagert gehalten. Insbesondere ist die Ausgangswelle 30 an dem zweiten Segment 18 des Mitnehmerarms 16 drehbar gelagert. Das zweite Segment 18 umfasst vorzugsweise eine Durchgangsöffnung, durch die die Ausgangswelle 30 hindurch gesteckt ist. Die Ausgangswelle 30 wird daher über eine bestimmte Länge radial vollständig durch den Mitnehmerarm 16 und insbesondere durch dessen zweites Segment 18 umgeben. Die Ausgangswelle 30 ist vorzugsweise mit dem Befestigungsflansch 3 verschraubt.

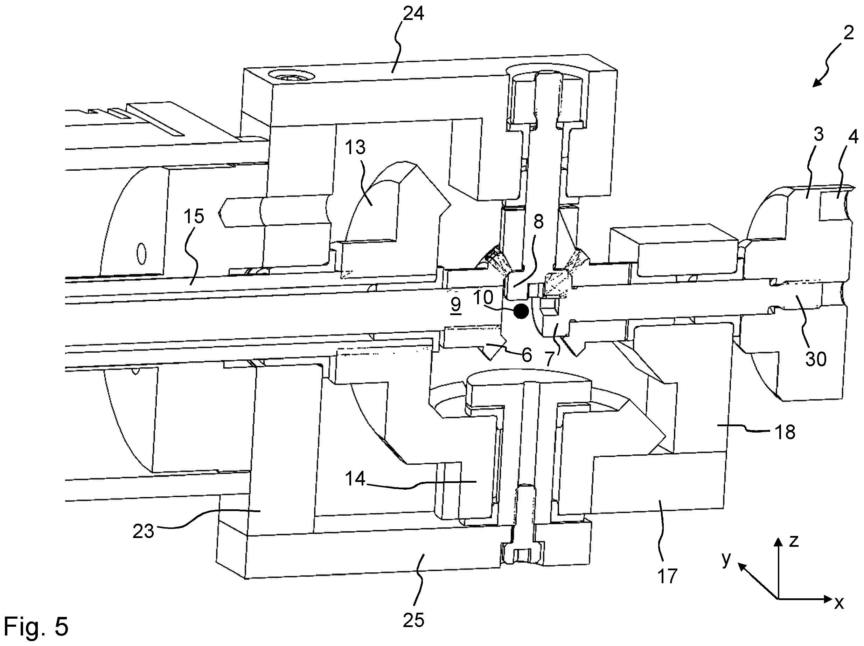

Figur 5 zeigt eine weitere räumliche Schnittdarstellung durch das Handgelenk 2 des erfindungsgemäßen Roboterarms. Die einzelnen Zahnräder sind auch hier wieder vereinfacht dargestellt, sodass der Übergang verschwommen scheint (zum Beispiel erstes Zahnrad 13 und zweites Zahnrad 14).

Vorzugsweise kann die zweite Verstelleinrichtung 12 in der ersten Ebene über einen größeren Winkelbereich verfahren werden als in der zweiten Ebene. Dies bedeutet, dass für den Fall, dass der Kreisabschnitt 11 durch Einstellung der dritten Verstelleinrichtung 22 in der ersten Ebene liegt (zum Beispiel Azimutebene) das Ausgangszahnrad 7 über einen größeren Winkelbereich um den Mittelpunkt 10 herum bewegt werden kann, als wenn der Kreisabschnitt 11 durch Einstellung der dritten Verstelleinrichtung 22 in der zweiten Ebene liegt (zum Beispiel Polarebene).

Das Handgelenk 2 des Roboterarms 1 hat eine Ausdehnung von vorzugsweise weniger als 30 cm, 25 cm, 20 cm, 15 cm oder weniger als 10 cm in X-Richtung. Ergänzend oder alternativ hat das Handgelenk 2 des Roboterarms 1 eine Ausdehnung von vorzugsweise weniger als 30 cm, 25 cm, 20 cm, 15 cm oder weniger als 10 cm in Y-Richtung. Ergänzend oder alternativ hat das Handgelenk 2 des Roboterarms 1 eine Ausdehnung von vorzugsweise weniger als 30 cm, 25 cm, 20 cm, 15 cm oder weniger als 10 cm in Z-Richtung.

Der Roboterarm 1 ist dazu ausgebildet, um Gewichte von vorzugsweise weniger als 5 kg, 4 kg, 3 kg, 2 kg oder von weniger als 1 kg mit drei translatorischen Freiheitsgraden auszurichten, die an dem Befestigungsflansch 3 angebracht sind.

Vorzugsweise verlaufen die Drehachsen des Eingangszahnrads 6, des Ausgangszahnrads 7, des Zwischenzahnrads 8, der ersten Welle 9, des ersten Zahnrads 13, des zweiten Zahnrads 14, der zweiten Welle 15 und der dritten Verstelleinrichtung 22 alle durch denselben Punkt, nämlich den Mittelpunkt 10.

Der Roboterarm 1 kann insbesondere in vollständig automatisierten Umgebungen eingesetzt werden. Vollständig automatisierte Umgebungen sind abgeschlossene Bereiche, in denen sich kein Mensch aufhält. Er kann aber auch in hybriden Umgebungen eingesetzt werden, um zum Beispiel einem Menschen entsprechende Teile zu reichen.

Nachfolgend werden noch einige Merkmale des Roboterarms 1 gesondert hervorgehoben.

Ein besonderer Vorteil des Roboterarms 1 liegt vor, wenn der Roboterarm 1 das folgende Merkmal umfasst:
- die Zähne des Ausgangszahnrads 7 greifen während einer Bewegung entlang des Kreisabschnitts 11 ausschließlich in die Zähne des Zwischenzahnrads 8 ein.

Ein besonderer Vorteil des Roboterarms 1 liegt vor, wenn der Roboterarm 1 das folgende Merkmal umfasst:
- die Drehachse des Eingangszahnrads 6 und die Drehachse des Ausgangszahnrads 7 liegen in derselben Ebene.

Ein besonderer Vorteil des Roboterarms 1 liegt vor, wenn der Roboterarm 1 das folgende Merkmal umfasst:
- das erste und/oder zweite Zahnrad 13, 14 der zweiten Verstelleinrichtung 12 haben einen größeren Durchmesser als das Eingangszahnrad 6 und/oder Zwischenzahnrad 8 und/oder Ausgangszahnrad 7 der ersten Verstelleinrichtung 5.

Ein besonderer Vorteil des Roboterarms 1 liegt vor, wenn der Roboterarm 1 das folgende Merkmal umfasst:
- der Mitnehmerarm 16 und das zweite Zahnrad 14 der zweiten Verstelleinrichtung 12 sind einteilig ausgebildet.

Ein besonderer Vorteil des Roboterarms 1 liegt vor, wenn der Roboterarm 1 das folgende Merkmal umfasst:
- das Eingangszahnrad 6 und das Zwischenzahnrad 8 sind jeweils drehbar aber in Bezug zueinander lageunveränderlich angeordnet, wenn lediglich die erste und/oder zweite Verstelleinrichtung 5, 12 in Betrieb ist.

## Patentansprüche

1. Roboterarm (1) mit einem Handgelenk (2) und einem Befestigungsflansch (3) mit den folgenden Merkmalen:
- das Handgelenk (2) umfasst eine erste Verstelleinrichtung (5), die zumindest ein Eingangszahnrad (6) und ein Ausgangszahnrad (7) umfasst;
- der Roboterarm (1) umfasst eine erste Welle (9), wobei das Eingangszahnrad (6) drehgekoppelt mit der ersten Welle (9) verbunden ist, wobei sich die erste Welle (9) von dem Handgelenk (2) weg erstreckt;
- das Ausgangszahnrad (7) ist mit dem Befestigungsflansch (3) drehgekoppelt, wobei eine Drehung des Eingangszahnrads (6) zu einer Drehung des Ausgangszahnrads (7) und damit zu einer Drehung des Befestigungsflansches (3) führt;
- das Handgelenk (2) umfasst eine zweite Verstelleinrichtung (12), die dazu ausgebildet ist, das Ausgangszahnrad (7) auf einem Kreisabschnitt (11) um einen Mittelpunkt (10) herum zu bewegen;
- das Handgelenk (2) umfasst eine dritte Verstelleinrichtung (22), welche einen Grundköper (23) umfasst und eine Drehachse aufweist, die koaxial zur Drehachse des Eingangszahnrads (6) der ersten Verstelleinrichtung (5) verläuft;
- die dritte Verstelleinrichtung (22) ist dazu ausgebildet, um die erste und die zweite Verstelleinrichtung (5, 12) durch eine dritte Motoranordnung (29) derart zu verfahren, dass der Kreisabschnitt (11) von einem Verlauf in einer ersten Ebene hin zu einem Verlauf in einer zweiten Ebene um den Mittelpunkt (10) übergeht, wobei die erste Ebene und die zweite Ebene senkrecht zueinander angeordnet sind; **dadurch gekennzeichnet, dass**
- der Grundkörper (23) mit einer Adapterplatte (32) der dritten Motoranordnung (29) verschraubt ist.

2. Roboterarm (1) nach Anspruch 1, **gekennzeichnet durch** die folgenden Merkmale:
- die erste Verstelleinrichtung (5) umfasst ein Zwischenzahnrad (8), welches zwischen dem Eingangszahnrad (6) und dem Ausgangszahnrad (7) angeordnet ist, wobei sowohl das Eingangszahnrad (6) als auch das Ausgangszahnrad (7) in die Zähne des Zwischenzahnrads (8) eingreifen;
- eine Drehbewegung des Eingangszahnrads (6) führt zu einer Drehbewegung des Zwischenzahnrads (8) und eine Drehbewegung des Zwischenzahnrads (8) führt zu einer Drehbewegung des Ausgangszahnrads (7);
- das Ausgangszahnrad (7) steht während der Bewegung entlang des Kreisabschnitts (11) in Kontakt mit dem Zwischenzahnrad (8).

3. Roboterarm (1) nach Anspruch 2, **gekennzeichnet durch** die folgenden Merkmale:
- eine Drehachse des Eingangszahnrads (6) verläuft durch den Mittelpunkt (10);
- eine Drehachse des Zwischenzahnrads (8) verläuft durch den Mittelpunkt (10);
- die Drehachse des Eingangszahnrads (6) und die Drehachse des Zwischenzahnrads (8) verlaufen senkrecht zueinander.

4. Roboterarm (1) nach Anspruch 2 oder 3, **gekennzeichnet durch** die folgenden Merkmale:
- das Eingangszahnrad (6) und das Ausgangszahnrad (7) sind Kegelräder, wobei die Kegelräder spiralverzahnt sind, sodass die Zähne des Ausgangszahnrads (7) für den Fall, dass das Ausgangszahnrad (7):
a) am Anfang des Kreisabschnitts (11); und/oder
b) am Ende des Kreisabschnitts (11);
angeordnet ist, außer Eingriff zu den Zähnen des Eingangszahnrads (6) stehen; und/oder
- der Roboterarm (1) umfasst eine Steuervorrichtung (19), wobei die Steuervorrichtung (19) dazu ausgebildet ist, um sicherzustellen, dass die zweite Verstelleinrichtung (12) derart angesteuert wird, dass sich das Ausgangszahnrad (7) durch Abrollen auf dem Zwischenzahnrad (8) lediglich derart weit auf dem Kreisabschnitt (11) bewegt, dass das Ausgangszahnrad (7) sowohl am Anfang des Kreisabschnitts (11) als auch am Ende des Kreisabschnitts (11) berührungsfrei zu dem Eingangszahnrad (6) positioniert ist.

5. Roboterarm (1) nach einem der vorherigen Ansprüche, **gekennzeichnet durch** die folgenden Merkmale:
- die zweite Verstelleinrichtung (12) umfasst ein erstes Zahnrad (13) und ein zweites Zahnrad (14);
- der Roboterarm (1) umfasst eine zweite Welle (15), wobei das erste Zahnrad (13) drehgekoppelt mit der zweiten Welle (15) verbunden ist, wobei sich die zweite Welle (15) von dem Handgelenk (2) weg erstreckt;
- eine Drehung des ersten Zahnrades (13) bewirkt eine Drehung des zweiten Zahnrads (14);
- die zweite Verstelleinrichtung (12) umfasst einen Mitnehmerarm (16), wobei der Mitnehmerarm (16) drehfest mit dem zweiten Zahnrad (14) verbunden bzw. gekoppelt ist;
- das Ausgangszahnrad (7) ist an dem Mitnehmerarm (16) gelagert, wobei eine Drehung des zweiten Zahnrads (14) ein Bewegen des Mitnehmerarms (16) um den Mittelpunkt (10) herum und damit ein Bewegen des Ausgangszahnrads (7) der ersten Verstelleinrichtung (5) auf dem Kreisabschnitt (11) um den Mittelpunkt (10) herum bewirkt.

6. Roboterarm (1) nach Anspruch 5, **gekennzeichnet durch** die folgenden Merkmale:
- die Drehachse des ersten Zahnrads (13) der zweiten Verstelleinrichtung (12) verläuft koaxial zur Drehachse des Eingangszahnrads (6) der ersten Verstelleinrichtung (5) ;
- die erste Welle (9) erstreckt sich durch das erste Zahnrad (13) der zweiten Verstelleinrichtung (12) hindurch, wobei das Eingangszahnrad (6) der ersten Verstelleinrichtung (5) zwischen dem ersten Zahnrad (13) der zweiten Verstelleinrichtung (12) und dem Mittelpunkt (10) angeordnet ist.

7. Roboterarm (1) nach Anspruch 5 oder 6, **gekennzeichnet durch** das folgende Merkmal:
- das erste Zahnrad (13) und das zweite Zahnrad (14) der zweiten Verstelleinrichtung (12) sind jeweils drehbar aber in Bezug zueinander lageunveränderlich angeordnet, wenn lediglich die erste und/oder zweite Verstelleinrichtung (5, 12) in Betrieb ist.

8. Roboterarm (1) nach einem der Ansprüche 5 bis 7, **gekennzeichnet durch** die folgenden Merkmale:
- eine Drehachse des ersten Zahnrads (13) der zweiten Verstelleinrichtung (12) verläuft durch den Mittelpunkt (10); und/oder
- eine Drehachse des zweiten Zahnrads (14) der zweiten Verstelleinrichtung (12) verläuft durch den Mittelpunkt (10); und/oder
- eine Drehachse des ersten Zahnrads (13) verläuft senkrecht zu einer Drehachse des zweiten Zahnrads (14).

9. Roboterarm (1) nach einem der Ansprüche 5 bis 8, **gekennzeichnet durch** die folgenden Merkmale:
- das Ausgangszahnrad (7) umfasst eine Ausgangswelle (30) ;
- die Ausgangswelle (30) ist mit dem Ausgangszahnrad (7) und dem Befestigungsflansch (3) drehfest verbunden;
- die Ausgangswelle (30) ist an dem Mitnehmerarm (16) gelagert gehalten.

10. Roboterarm (1) nach einem der Ansprüche 5 bis 9, **gekennzeichnet durch** die folgenden Merkmale:
- der Roboterarm (1) umfasst eine erste und eine zweite Motoranordnung (27, 28);
- die erste Motoranordnung (27) ist dazu ausgebildet, um die erste Welle (9) anzutreiben;
- die zweite Motoranordnung (28) ist dazu ausgebildet, um die zweite Welle (15) anzutreiben;
- die zweite Welle (15) ist hohl, wobei die erste Welle (9) durch die zweite Welle (15) hindurch verläuft.

11. Roboterarm (1) nach zumindest einem der vorherigen Ansprüche, **gekennzeichnet durch** die folgenden Merkmale:
- die dritte Verstelleinrichtung (22) umfasst neben dem Grundköper (23) einen ersten und zweiten Befestigungsabschnitt (24, 25), wobei der erste und der zweite Befestigungsabschnitt (24, 25) von dem Grundkörper (23) abstehen;
- das Zwischenzahnrad (8) der ersten Verstelleinrichtung (5) ist drehbar an dem ersten Befestigungsabschnitt (24) gelagert;
- das zweite Zahnrad (14) der zweiten Verstelleinrichtung (12) ist drehbar an dem zweiten Befestigungsabschnitt (25) gelagert;
- in einer ersten Position der dritten Verstelleinrichtung (22) verläuft der Kreisabschnitt (11) in der ersten Ebene und in einer zweiten Position der dritten Verstelleinrichtung (22) verläuft der Kreisabschnitt (11) in der zweiten Ebene;
- die dritte Verstelleinrichtung (22) ist dazu ausgebildet, um durch eine Drehung um die Drehachse von der ersten Position in die zweite Position überzugehen, wodurch das Zwischenzahnrad (8) der ersten Verstelleinrichtung (5) an dem Eingangszahnrad (6) der ersten Verstelleinrichtung (5) abrollt und wodurch das zweite Zahnrad (14) der zweiten Verstelleinrichtung (12) an dem ersten Zahnrad (13) der zweiten Verstelleinrichtung (12) abrollt.

12. Roboterarm (1) nach Anspruch 11, **gekennzeichnet durch** die folgenden Merkmale:
- der Roboterarm (1) umfasst eine Steuervorrichtung (19);
- die Steuervorrichtung (19) ist dazu ausgebildet, um sicherzustellen, dass die erste und zweite Verstelleinrichtung (5, 12) derart angesteuert werden, dass die Position des Befestigungsflanschs (3) im Raum in etwa ortsfest bleibt, während die dritte Verstelleinrichtung (22) von der:
a) ersten Position in die zweite Position; oder
b) zweiten Position in die erste Position übergeht.

13. Roboterarm (1) nach einem der Ansprüche 1, 11 oder 12 und nach Anspruch 9, **gekennzeichnet durch** die folgenden Merkmale:
- die dritte Motoranordnung (29) ist näher am Handgelenk (2) angeordnet als die zweite Motoranordnung (28), wobei die zweite Motoranordnung (28) näher am Handgelenk (2) angeordnet ist als die erste Motoranordnung (27);
- die zweite Welle (15) verläuft durch die dritte Motoranordnung (29) hindurch.

14. Roboterarm (1) nach Anspruch 13, **gekennzeichnet durch** das folgende Merkmal:
- die erste, zweite und dritte Motoranordnung (27, 28, 29) sind unabhängig voneinander ansteuerbar.

## Claims

1. Robot arm (1) having a wrist joint (2) and a fastening flange (3), and having the following features:
- the wrist joint (2) comprises a first adjusting device (5), which comprises at least an input gearwheel (6) and an output gearwheel (7);
- the robot arm (1) comprises a first shaft (9), wherein the input gearwheel (6) is connected to the first shaft (9) in a rotationally coupled manner, wherein the first shaft (9) extends away from the wrist joint (2);
- the output gearwheel (7) is rotationally coupled to the fastening flange (3), wherein a rotation of the input gearwheel (6) results in a rotation of the output gearwheel (7) and thus results in a rotation of the fastening flange (3);
- the wrist joint (2) comprises a second adjusting device (12), which is designed to move the output gearwheel (7) on a circle segment (11) about a centre point (10);
- the wrist joint (2) comprises a third adjusting device (22), which comprises a main body (23) and has an axis of rotation that runs coaxially to the axis of rotation of the input gearwheel (6) of the first adjusting device (5);
- the third adjusting device (22) is designed to displace the first and the second adjusting device (5, 12) by means of a third motor assembly (29) in such a manner that the circle segment (11) transitions from running in a first plane to running in a second plane about the centre point (10), wherein the first plane and the second plane are arranged perpendicular to one another; **characterized in that**
- the main body (23) is screw-fastened to an adapter plate (32) of the third motor assembly (29).

2. Robot arm (1) according to Claim 1, **characterized by** the following features:
- the first adjusting device (5) comprises an intermediate gearwheel (8), which is arranged between the input gearwheel (6) and the output gearwheel (7), wherein both the input gearwheel (6) and the output gearwheel (7) mesh with the teeth of the intermediate gearwheel (8);
- a rotary movement of the input gearwheel (6) results in a rotary movement of the intermediate gearwheel (8), and a rotary movement of the intermediate gearwheel (8) results in a rotary movement of the output gearwheel (7);
- the output gearwheel (7) is, during the movement along the circle segment (11), in contact with the intermediate gearwheel (8).

3. Robot arm (1) according to Claim 2, **characterized by** the following features:
- an axis of rotation of the input gearwheel (6) runs through the centre point (10);
- an axis of rotation of the intermediate gearwheel (8) runs through the centre point (10);
- the axis of rotation of the input gearwheel (6) and the axis of rotation of the intermediate gearwheel (8) run perpendicular to one another.

4. Robot arm (1) according to Claim 2 or 3, **characterized by** the following features:
- the input gearwheel (6) and the output gearwheel (7) are bevel gears, wherein the bevel gears have helical teeth, with the result that, in the event that the output gearwheel (7) is arranged:
a) at the beginning of the circle segment (11); and/or
b) at the end of the circle segment (11);
the teeth of the output gearwheel (7) are not meshed with the teeth of the input gearwheel (6); and/or
- the robot arm (1) comprises a control unit (19), wherein the control unit (19) is designed to ensure that the second adjusting device (12) is activated in such a manner that the output gearwheel (7), by meshing with rolling contact with the intermediate gearwheel (8), is moved only to such an extent on the circle segment (11) that the output gearwheel (7), both at the beginning of the circle segment (11) and at the end of the circle segment (11), is positioned so as not to be in contact with the input gearwheel (6).

5. Robot arm (1) according to one of the preceding claims, **characterized by** the following features:
- the second adjusting device (12) comprises a first gearwheel (13) and a second gearwheel (14);
- the robot arm (1) comprises a second shaft (15), wherein the first gearwheel (13) is connected to the second shaft (15) in a rotationally coupled manner, wherein the second shaft (15) extends away from the wrist joint (2);
- a rotation of the first gearwheel (13) causes a rotation of the second gearwheel (14);
- the second adjusting device (12) comprises a driver arm (16), wherein the driver arm (16) is connected or coupled to the second gearwheel (14) in a rotationally fixed manner;
- the output gearwheel (7) is mounted on the driver arm (16), wherein a rotation of the second gearwheel (14) causes a movement of the driver arm (16) about the centre point (10) and thus causes a movement of the output gearwheel (7) of the first adjusting device (5) on the circle segment (11) about the centre point (10).

6. Robot arm (1) according to Claim 5, **characterized by** the following features:
- the axis of rotation of the first gearwheel (13) of the second adjusting device (12) runs coaxially to the axis of rotation of the input gearwheel (6) of the first adjusting device (5);
- the first shaft (9) extends through the first gearwheel (13) of the second adjusting device (12), wherein the input gearwheel (6) of the first adjusting device (5) is arranged between the first gearwheel (13) of the second adjusting device (12) and the centre point (10).

7. Robot arm (1) according to Claim 5 or 6, **characterized by** the following feature:
- the first gearwheel (13) and the second gearwheel (14) of the second adjusting device (12) are each arranged so as to be rotatable but positionally invariable in relation to one another, when only the first and/or second adjusting device (5, 12) is in operation.

8. Robot arm (1) according to one of Claims 5 to 7, **characterized by** the following features:
- an axis of rotation of the first gearwheel (13) of the second adjusting device (12) runs through the centre point (10); and/or
- an axis of rotation of the second gearwheel (14) of the second adjusting device (12) runs through the centre point (10); and/or
- an axis of rotation of the first gearwheel (13) runs perpendicular to an axis of rotation of the second gearwheel (14).

9. Robot arm (1) according to one of Claims 5 to 8, **characterized by** the following features:
- the output gearwheel (7) comprises an output shaft (30) ;
- the output shaft (30) is connected to the output gearwheel (7) and the fastening flange (3) in a rotationally fixed manner;
- the output shaft (30) is held so as to be mounted on the driver arm (16).

10. Robot arm (1) according to one of Claims 5 to 9, **characterized by** the following features:
- the robot arm (1) comprises a first and a second motor assembly (27, 28);
- the first motor assembly (27) is designed to drive the first shaft (9);
- the second motor assembly (28) is designed to drive the second shaft (15);
- the second shaft (15) is hollow, wherein the first shaft (9) runs through the second shaft (15).

11. Robot arm (1) according to at least one of the preceding claims, **characterized by** the following features:
- the third adjusting device (22) comprises, in addition to the main body (23), a first and second fastening portion (24, 25), wherein the first and the second fastening portion (24, 25) protrude from the main body (23);
- the intermediate gearwheel (8) of the first adjusting device (5) is mounted so as to be rotatable on the first fastening portion (24);
- the second gearwheel (14) of the second adjusting device (12) is mounted so as to be rotatable on the second fastening portion (25);
- the circle segment (11) runs in the first plane when the third adjusting device (22) is in a first position, and the circle segment (11) runs in the second plane when the third adjusting device (22) is in a second position;
- the third adjusting device (22) is designed to transition from the first position to the second position by means of a rotation about the axis of rotation, as a result of which the intermediate gearwheel (8) of the first adjusting device (5) meshes with rolling contact with the input gearwheel (6) of the first adjusting device (5), and as a result of which the second gearwheel (14) of the second adjusting device (12) meshes with rolling contact with the first gearwheel (13) of the second adjusting device (12).

12. Robot arm (1) according to Claim 11, **characterized by** the following features:
- the robot arm (1) comprises a control unit (19);
- the control unit (19) is designed to ensure that the first and second adjusting device (5, 12) are activated in such a manner that the position of the fastening flange (3) remains approximately at a fixed location in space, while the third adjusting device (22) transitions from the:
a) first position to the second position; or
b) second position to the first position.

13. Robot arm (1) according to one of Claims 1, 11 and 12 and according to Claim 9, **characterized by** the following features:
- the third motor assembly (29) is arranged closer to the wrist joint (2) than the second motor assembly (28) is, wherein the second motor assembly (28) is arranged closer to the wrist joint (2) than the first motor assembly (27) is;
- the second shaft (15) runs through the third motor assembly (29).

14. Robot arm (1) according to Claim 13, **characterized by** the following feature:
- the first, second and third motor assembly (27, 28, 29) can be activated independently of one another.

## Revendications

1. Bras robotique (1) doté d'un poignet (2) et d'une bride de fixation (3) présentant les caractéristiques suivantes :
- le poignet (2) comprend un premier dispositif de réglage (5) qui comprend au moins une roue dentée d'entrée (6) et une roue dentée de sortie (7) ;
- le bras robotique (1) comprend un premier arbre (9), la roue dentée d'entrée (6) étant reliée au premier arbre (9) de manière accouplée en rotation, le premier arbre (9) s'étendant à partir du poignet (2) en s'éloignant de celui-ci ;
- la roue dentée de sortie (7) est accouplée en rotation à la bride de fixation (3), une rotation de la roue dentée d'entrée (6) menant à une rotation de la roue dentée de sortie (7) et donc à une rotation de la bride de fixation (3) ;
- le poignet (2) comprend un deuxième dispositif de réglage (12) qui est conçu pour déplacer la roue dentée de sortie (7) sur un segment de cercle (11) autour d'un centre (10) ;
- le poignet (2) comprend un troisième dispositif de réglage (22), lequel comprend un corps de base (23) et présente un axe de rotation qui s'étend de manière coaxiale à l'axe de rotation de la roue dentée d'entrée (6) du premier dispositif de réglage (5) ;
- le troisième dispositif de réglage (22) est conçu pour déplacer le premier et le deuxième dispositif de réglage (5, 12) par le biais d'un troisième ensemble moteur (29) de telle sorte que le segment de cercle (11) passe d'un tracé dans un premier plan à un tracé dans un deuxième plan autour du centre (10), le premier plan et le deuxième plan étant disposés perpendiculairement l'un à l'autre ; **caractérisé en ce que**
- le corps de base (23) est vissé sur une plaque d'adaptateur (32) du troisième ensemble moteur (29).

2. Bras robotique (1) selon la revendication 1, **caractérisé par** les caractéristiques suivantes :
- le premier dispositif de réglage (5) comprend une roue dentée intermédiaire (8), laquelle est disposée entre la roue dentée d'entrée (6) et la roue dentée de sortie (7), à la fois la roue dentée d'entrée (6) et la roue dentée de sortie (7) s'engrenant dans les dents de la roue dentée intermédiaire (8) ;
- un mouvement de rotation de la roue dentée d'entrée (6) menant à un mouvement de rotation de la roue dentée intermédiaire (8) et un mouvement de rotation de la roue dentée intermédiaire (8) menant à un mouvement de rotation de la roue dentée de sortie (7) ;
- la roue dentée de sortie (7) est en contact avec la roue dentée intermédiaire (8) pendant le mouvement le long du segment de cercle (11).

3. Bras robotique (1) selon la revendication 2, **caractérisé par** les caractéristiques suivantes :
- un axe de rotation de la roue dentée d'entrée (6) passe par le centre (10) ;
- un axe de rotation de la roue dentée intermédiaire (8) passe par le centre (10) ;
- l'axe de rotation de la roue dentée d'entrée (6) et l'axe de rotation de la roue dentée intermédiaire (8) s'étendent perpendiculairement l'un à l'autre.

4. Bras robotique (1) selon la revendication 2 ou 3, **caractérisé par** les caractéristiques suivantes :
- la roue dentée d'entrée (6) et la roue dentée de sortie (7) sont des roues coniques, les roues coniques étant à denture spirale, de sorte que les dents de la roue dentée de sortie (7), dans le cas où la roue dentée de sortie (7) est disposée :
a) au début du segment de cercle (11) ; et/ou
b) à la fin du segment de cercle (11) ;
soient hors d'engrènement avec les dents de la roue dentée d'entrée (6) ; et/ou
- le bras robotique (1) comprend un dispositif de commande (19), le dispositif de commande (19) étant conçu pour garantir que le deuxième dispositif de réglage (12) soit commandé de telle sorte que la roue dentée de sortie (7), par roulement sur la roue dentée intermédiaire (8), se déplace sur le segment de cercle (11) seulement dans une mesure telle que la roue dentée de sortie (7) soit positionnée sans contact par rapport à la roue dentée d'entrée (6) à la fois au début du segment de cercle (11) et à la fin du segment de cercle (11).

5. Bras robotique (1) selon l'une des revendications précédentes, **caractérisé par** les caractéristiques suivantes :
- le deuxième dispositif de réglage (12) comprend une première roue dentée (13) et une deuxième roue dentée (14) ;
- le bras robotique (1) comprend un deuxième arbre (15), la première roue dentée (13) étant reliée de manière accouplée en rotation au deuxième arbre (15), le deuxième arbre (15) s'étendant à partir du poignet (2) en s'éloignant de celui-ci ;
- une rotation de la première roue dentée (13) provoquant une rotation de la deuxième roue dentée (14) ;
- le deuxième dispositif de réglage (12) comprend un bras d'entraînement (16), le bras d'entraînement (16) étant relié ou accouplé de manière solidaire en rotation à la deuxième roue dentée (14) ;
- la roue dentée de sortie (7) est montée sur le bras d'entraînement (16), une rotation de la deuxième roue dentée (14) provoquant un mouvement du bras d'entraînement (16) autour du centre (10) et donc un mouvement de la roue dentée de sortie (7) du premier dispositif de réglage (5) sur le segment de cercle (11) autour du centre (10).

6. Bras robotique (1) selon la revendication 5, **caractérisé par** les caractéristiques suivantes :
- l'axe de rotation de la première roue dentée (13) du deuxième dispositif de réglage (12) s'étend de manière coaxiale à l'axe de rotation de la roue dentée d'entrée (6) du premier dispositif de réglage (5) ;
- le premier arbre (9) s'étend à travers la première roue dentée (13) du deuxième dispositif de réglage (12), la roue dentée d'entrée (6) du premier dispositif de réglage (5) étant disposée entre la première roue dentée (13) du deuxième dispositif de réglage (12) et le centre (10) .

7. Bras robotique (1) selon la revendication 5 ou 6, **caractérisé par** la caractéristique suivante :
- la première roue dentée (13) et la deuxième roue dentée (14) du deuxième dispositif de réglage (12) sont disposées respectivement de manière rotative mais de manière fixe en position l'une par rapport à l'autre, lorsque seulement le premier et/ou le deuxième dispositif de réglage (5, 12) est/sont en fonctionnement.

8. Bras robotique (1) selon l'une des revendications 5 à 7, **caractérisé par** les caractéristiques suivantes :
- un axe de rotation de la première roue dentée (13) du deuxième dispositif de réglage (12) passe par le centre (10) ; et/ou
- un axe de rotation de la deuxième roue dentée (14) du deuxième dispositif de réglage (12) passe par le centre (10) ; et/ou
- un axe de rotation de la première roue dentée (13) s'étend perpendiculairement à un axe de rotation de la deuxième roue dentée (14).

9. Bras robotique (1) selon l'une des revendications 5 à 8, **caractérisé par** les caractéristiques suivantes :
- la roue dentée de sortie (7) comprend un arbre de sortie (30) ;
- l'arbre de sortie (30) est relié de manière solidaire en rotation à la roue dentée de sortie (7) et à la bride de fixation (3) ;
- l'arbre de sortie (30) est retenu de manière montée sur le bras d'entraînement (16).

10. Bras robotique (1) selon l'une des revendications 5 à 9, **caractérisé par** les caractéristiques suivantes :
- le bras robotique (1) comprend un premier et un deuxième ensemble moteur (27, 28) ;
- le premier ensemble moteur (27) est conçu pour entraîner le premier arbre (9) ;
- le deuxième ensemble moteur (28) est conçu pour entraîner le deuxième arbre (15) ;
- le deuxième arbre (15) est creux, le premier arbre (9) s'étendant à travers le deuxième arbre (15).

11. Bras robotique (1) selon au moins l'une des revendications précédentes, **caractérisé par** les caractéristiques suivantes :
- le troisième dispositif de réglage (22) comprend, en plus du corps de base (23), une première et une deuxième partie de fixation (24, 25), la première et la deuxième partie de fixation (24, 25) dépassant du corps de base (23) ;
- la roue dentée intermédiaire (8) du premier dispositif de réglage (5) est montée rotative sur la première partie de fixation (24) ;
- la deuxième roue dentée (14) du deuxième dispositif de réglage (12) est montée rotative sur la deuxième partie de fixation (25) ;
- dans une première position du troisième dispositif de réglage (22), le segment de cercle (11) s'étend dans le premier plan et, dans une deuxième position du troisième dispositif de réglage (22), le segment de cercle (11) s'étend dans le deuxième plan ;
- le troisième dispositif de réglage (22) est conçu pour passer de la première position à la deuxième position par une rotation autour de l'axe de rotation, de sorte que la roue dentée intermédiaire (8) du premier dispositif de réglage (5) roule sur la roue dentée d'entrée (6) du premier dispositif de réglage (5) et de sorte que la deuxième roue dentée (14) du deuxième dispositif de réglage (12) roule sur la première roue dentée (13) du deuxième dispositif de réglage (12).

12. Bras robotique (1) selon la revendication 11, **caractérisé par** les caractéristiques suivantes :
- le bras robotique (1) comprend un dispositif de commande (19) ;
- le dispositif de commande (19) est conçu pour garantir que le premier et le deuxième dispositif de réglage (5, 12) soient commandés de telle sorte que la position de la bride de fixation (3) demeure sensiblement fixe dans l'espace, pendant que le troisième dispositif de réglage (22) passe :
a) de la première position à la deuxième position ; ou
b) de la deuxième position à la première position.

13. Bras robotique (1) selon l'une des revendications 1, 11 ou 12 et selon la revendication 9, **caractérisé par** les caractéristiques suivantes :
- le troisième ensemble moteur (29) est disposé plus près du poignet (2) que le deuxième ensemble moteur (28), le deuxième ensemble moteur (28) étant disposé plus près du poignet (2) que le premier ensemble moteur (27) ;
- le deuxième arbre (15) s'étend à travers le troisième ensemble moteur (29).

14. Bras robotique (1) selon la revendication 13, **caractérisé par** la caractéristique suivante :
- les premier, deuxième et troisième ensembles moteurs (27, 28, 29) peuvent être commandés indépendamment les uns des autres.
